# EUROPEAN PATENT APPLICATION

(11) **EP 1 475 923 A2**
(43) Date of publication of application: **10.11.2004**
(21) Application number: 04076341.9
(22) Date of filing: 04.05.2004
(51) Int. Cl.: H04L 12/28, B60R 16/02, H04L 29/06

(54) **Wireless communications system for a tractor and trailer combination and other structures**

(30) Priority: 05.05.2003 US 430553
(71) Applicant: Preco Electronics, Inc., Boise, Idaho 83704 (US)
(72) Inventor: MacFarland, Darin, Meridian, ID 83642 (US)
(74) Representative: Gee, Steven William

(57) **Abstract**

A wireless communication system may be used for exchanging information between all types of vehicles and to/from locations within radio range of said vehicles, where there is a need for data transfer in order to monitor and control certain functions and equipment on, withm or near a vehicle. This may be made possible via connection of sub-networks over a common-protocol wireless network. A system for converting between various wired data links to a common wireless link is provided. An interface translator is provided to make this data conversion possible, and the translator may provide a full-duplex linkage between a network that implements a wireless protocol, and an interconnected data bus, which interfaces to a vehicle measurement and control system. A wireless link side of the translator may be of generally homogeneous design, while the measurement and control side of the translator may be customizable. Each node on the network communicates packetized data with other nodes present on the network. This network facilitates ease of use, whereby nodes can be installed in a variety of different vehicles for vehicular communication, or extra-vehicular locations/equipment such as buildings, docks, gates, or other areas near vehicles, for extra-vehicular communication.

## Description

### BACKGROUND OF THE INVENTION

### Field of the Invention.

Embodiments of the present invention relate generally to wirelessly-networked computing devices. In particular, embodiments of the invention relate to the seamless translation of data between a variety of sub-networks across nodes of a wireless network in a system that communicates within and between vehicles.

### Related Art

In reviewing the body of patents and commercial products that incorporate wireless networking of data within and between vehicles, none of the information revealed a method similar to the invention of providing interface translation that facilitates the communication of independent sub-networks across nodes of a wireless network in a system.

*McCormack et al,* in U.S. Patent 5,387,994, teach about a communications adapter that converts data between a wire-based communication system and a wireless communication system. The system described in *McCormack et al* has a limited set of features that includes the incorporation of an infrared linkage to a PC laptop from a data-logging device. On the commercial side, the BellSouth / Ericcson Mobile Data Mobitex™ System provides seamless data transfers between handheld devices. Qualcomm Corporation's Omnitracs^{TM} system links different vehicles and base locations via satellite. However, none of these prior art systems embodies the present inventor's concept of the hardware interface translation between the wireless and the wired side of a communications node, nor do they make use of the discrete sub-networks of the preferred embodiments of the present invention.

### SUMMARY OF THE INVENTION

As an introduction to the problems solved by the present invention, consider the development of various present-day wireless networking methods used in vehicle telecommunication systems. The problems solved by the prior art involve communication between a server and clients across a wireless network, the establishment of various protocols, and the improvement of data integrity, among other improvements.

None of the prior art or product offerings reviewed by this inventor, however, provides a means of converting between various existing and/or proprietary wired data links to a common protocol wireless link. A feature of the preferred embodiments of the present invention is an interface translator circuit that makes this data conversion possible. This translator provides a full-duplex linkage between a wireless protocol, such as the Bluetooth protocol, and any type of wired link that exists or is designed into a vehicle measurement and control system.

In one embodiment of the present invention, there are a multiplicity of Bluetooth transceiver modules (preferably a minimum of two) that intercommunicate, via radio frequency transmission and reception, to other Bluetooth modules. Each Bluetooth communications module, which is an industry standard wireless interface node, is in wired communication with an interface translator that has a sub-network side and a Bluetooth side. The hard-wired sub-networks that connect to each translator may contain sensors and control circuits, wired by any number of different wired interface methods to each respective translator. Each translator, on its other end, sends and receives data to and from its own Bluetooth module. In this scheme, everything on the "Bluetooth side" of the translator is preferably a homogeneous part of the system, and the "opposite side" of the translator is preferably a customizable part of the system. Each of the Bluetooth modules comprises a node on the wireless network that communicates full-duplex packetized data with any and all other Bluetooth modules present on their wireless network.

In other embodiments of the present invention, the Bluetooth modules can be replaced with any number of other wireless LAN transceiver types. Examples include the IEEE standard 802.11 compatible wireless interface, WAP (Wireless Application Protocol) interface, or other standard or proprietary wireless interfaces.

Some embodiments of the invention may be described as an inter-nodal, expandable wireless communications network for vehicles, having a plurality of programmable nodes. Each node may comprise a radio frequency transceiver for data communication to or from any other node, an interface translator circuit capable of encoding and decoding packetized information, and a local, hard-wired interface bus. The interface translator circuit may comprise a microprocessor and data storage circuit for implementation of a data protocol, and a generic data transfer protocol for transceiving of packetized information amongst a plurality of nodes in said network, and an interface circuit for signal communication with the local interface bus. The interface bus may comprise a circuit that provides bi-directional signal communication with said interface translator, monitoring circuitry for gathering data from a multiplicity of separate inputs, and controlling circuitry for outputting a multiplicity of separate signals, for control of external devices. Other embodiments of the invention may be described as an inter-nodal, expandable radio communications network, having physical, programmable nodes located on, within or near vehicles, wherein each node may comprise a radio frequency transceiver for two-way data communication to or from any other node, an interface translator circuit capable of encoding and decoding packetized information, and a local, hard-wired interface bus. The radio frequency transceiver for data communication may be a Bluetooth compatible radio, for example. The local, hard-wired interface bus circuit may be a CAN standard bus, a SAE J1708 standard bus, an IEEE RS-422 standard bus, or an IEEE 1394 FireWire standard bus, for example.

These and other embodiments, aspects, advantages and features of the present invention will be set forth in part in the description, and in part will come to those skilled in the art by reference to the following description of the invention and referenced drawings, or by practice of the invention.

### BRIEF DESCRIPTION OF THE DRAWINGS

Figure 1 is a perspective schematic diagram showing example mounting locations of network nodes according to one embodiment of the invention.
Figure 2 is a schematic wiring diagram of one embodiment of the present invention showing two example nodes and their sensors and controls.
Figure 3 is a schematic diagram showing the interconnectedness of wired sub-networks onto the wireless network according to one embodiment of the invention.
Figure 4 is a schematic diagram showing the subcomponents of the interface translator circuit contained in the node circuitry according to one embodiment of the present invention.

### DETAILED DESCRIPTION OF THE INVENTION

Referring to the Figures, there are shown several, but not the only, embodiments of the invention. Embodiments of the present invention are useful for exchanging information between all types of vehicles and to/from locations with proximity of said vehicles, where there is a need for data transfer in order to monitor on-board systems and to control certain functions and equipment on, within or near a vehicle.

It is an object of the present invention to provide a wireless local area network that incorporates a protocol stack that includes a host interface. This wireless network facilitates ease of use, whereby nodes on the network can be installed in a variety of different vehicles, be they towed or towing types of vehicles, and nodes can be installed in areas near vehicles, for extra-vehicular communication.

In examining the wireless networking standards available to the public that can be adopted to suit the needs of the present invention, the Bluetooth protocol is a set of software modules that can be run on a variety of different microprocessors and microcontrollers. The software modules are linked into a kernel image. The protocol provides the necessary means for managing data transfers from between 10 and 100 million bits per second. Detailed information and open-source versions of the software are available in the public domain for implementing Bluetooth, such as on the web site http://www.thewirelessdirectory.com.

In some embodiments of the present invention, Bluetooth wireless LAN is implemented on a microcontroller in an Interface Translator circuit, as will be described below.

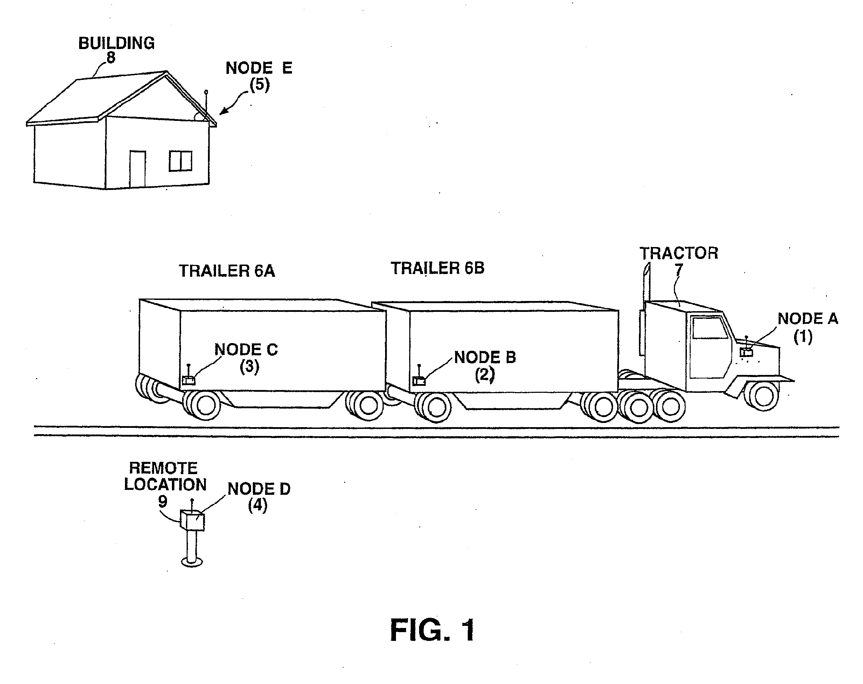

Referring to the drawings contained in this specification, Figure 1 is a pictorial diagram showing typical mounting locations of nodes within the network. A typical commercial tractor 7 is equipped with a network node A (1), while trailers 6a and 6b are fitted with nodes B and C (2, 3).

A remote location 9, such as an entry gate, where an operator can open the gate upon password entry, or by automatic vehicle identification, can be fitted with node D (4), which is designed for rugged or self-powered use, as required to suit its location. A building 8, such as a vehicle handling facility where data are transferred concerning rental information, mileage, bills of lading, vehicle records, pass permissions, etc., can be fitted with a typical node E (5). Such a node may be designed for in-building use. Any other number of locations can be chosen for installation on, within or near a vehicle. Vehicle types include all types of ground, water and aircraft. Remote and building locations can include any type of terminal, roadside, dock, or other place where extra-vehicular communication of data is required.

It is also an object of the present invention to allow the connection of many types of equipment with many types of interfaces to any node on the network. A node, therefore, can be thought of as a sub-network that has hard-wired interface circuits that connect to any external equipment through to the network. The node's electronic circuitry and the software that is executed on the node circuitry can be adapted to suit any number of different interfaces, including industry standard types, such as CAN (ISO 11898), SAE J1708, IEEE RS-422, USB Interface, IEEE 1394 FireWire Interface, etc.

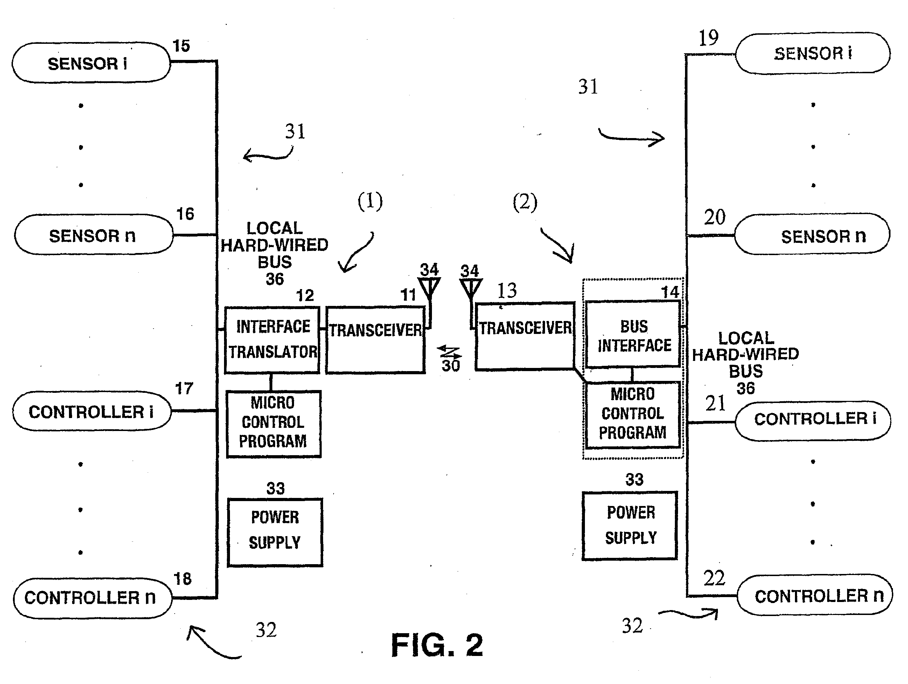

Figure 2 is a schematic diagram of one embodiment of the present invention showing two typical nodes 1, 2, their sensors 31 and controllers 32. In this diagram, two Bluetooth modules 11, 13 are connected via wireless link 30. Each Bluetooth module 11, 13 communicates to an interface translator 12, 14. Together, the Bluetooth module and interface translator comprise the main elements of a node, where Bluetooth module 11 and interface translator 12 comprise node A (1), and Bluetooth module 13 and interface translator 14 comprise node B (2). Each node contains some type of power supply 33, be it powered from a battery, AC mains, solar panel or other means. Node A (1) monitors signals and data from sensors of various types 15, 16, and similarly, node B (2) monitors signals and data from sensors 19, 20. Node A (1) can control equipment various equipment with controllers 17, 18, and similarly, node B (2) can control equipment various equipment with controllers 21, 22. It is important to note that the circuitry of all sensors 31 and all controllers 32 can be interconnected with an interface translator 12, 14 by way of any variety of hard-wired connection or interface bus 36. Said interface translators 12, 14 may be implemented to facilitate this variety of interfaces. Examples of sensors 31 may include, but are not limited to, sensors of temperature, pressure, switch position/condition, etc. Controllers 32 may include, but are not limited to, controllers of alarms, lights, refrigeration, displays, etc.

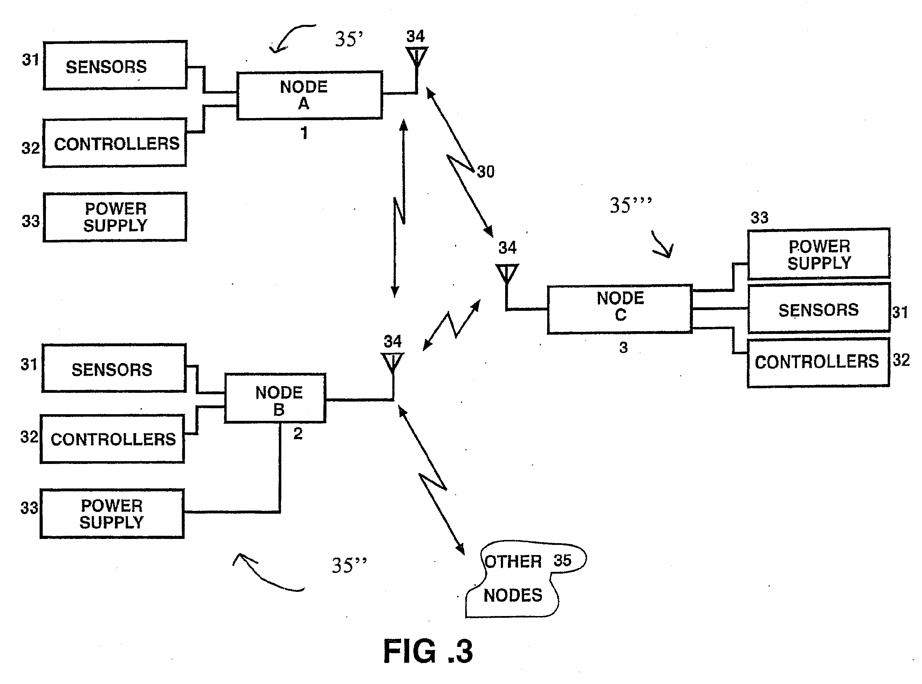

Figure 3 is a schematic diagram showing the interconnectedness of wired sub-networks onto the wireless network. Each of nodes A, B, and C (1, 2, 3), along with their sensors 31, controllers 32, power supplies 33 and antennae 34, make up a separate sub-network 35. Various different sub-networks are illustrated in Figure 3 as 35, 35', 35", 35"'. Each sub-network 35 communicates with each other sub-network via transceiving radio links 30. Additional sub-networks 35 can be added as required to expand the system capability.

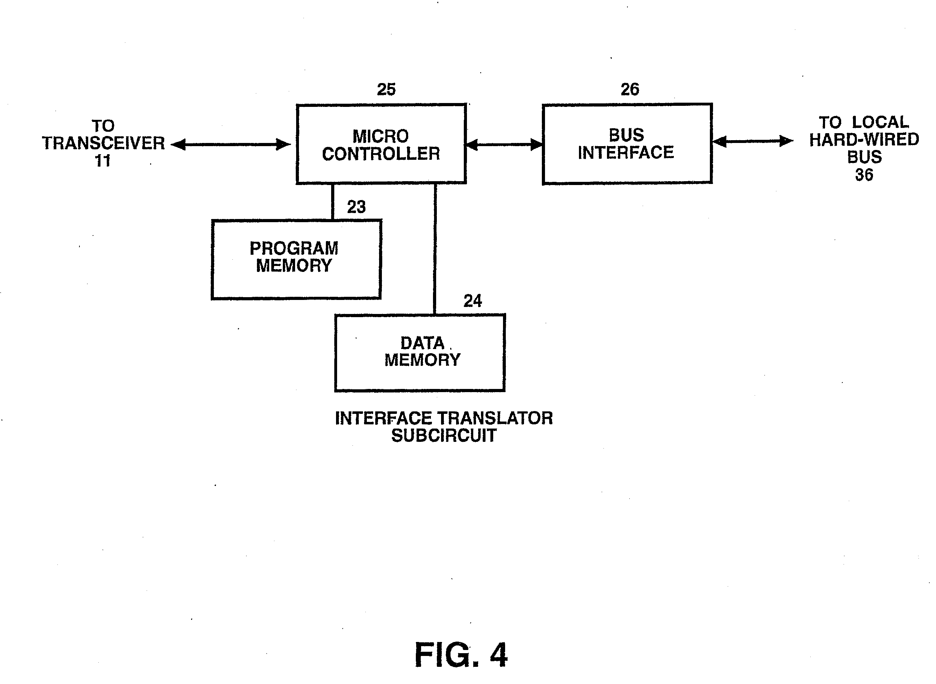

Figure 4 is a schematic diagram showing the subcomponents of the interface translator circuit contained in the node circuitry of some embodiments of the present invention. For example, signals from data transceiver 11 connect to microcontroller 25. Microcontroller 25 operates according to the program stored in program memory 23, and is able to store and retrieve data from data memory 24. Such an interface translation program preferably incorporates a protocol stack based upon the TCP/IP Reference Standard. Microcontroller 25 is also connected to bus interface 26, whereby data can be exchanged with local hard-wired bus 36.

The usefulness of the present invention is extensive, whereas any different sensor can be monitored by any other node. Any controller can likewise be controlled by any other node. A node may act as a client or server or both. Encryption, data processing, distributed monitoring and control can be implemented, and any other distributed process or operation can be accomplished across the network, so long as a node is within radio contact of its network.

The choice of a transceiver and/or a wireless protocol other than Bluetooth is also possible. Bluetooth is a standard interface that performs well in a vehicle environment, but it is one of numerous possible interfaces that are feasible and could be included as functional equivalents in this invention.

In summary, a wireless communication system according to embodiments of the invention may be used for exchanging information between all types of vehicles and to/from locations within radio range of said vehicles, where there is a need for data transfer in order to monitor and control certain functions and equipment on, within or near a vehicle. This is made possible via the connection of sub-networks over a common-protocol wireless network. A system for converting between various wired data links to a common wireless link is provided. An interface translator is provided to make this data conversion possible. This translator provides a full-duplex linkage between a network that implements a wireless protocol, and an interconnected data bus, which interfaces to a vehicle measurement and control system. The homogeneous part of the system is on the wireless link side of the translator, and the customizable part of the system is on the measurement and control side of the translator. Each node on the network communicates packetized data with other nodes present on the network. This network facilitates ease of use, whereby nodes can be installed in a variety of different vehicles or on extra-vehicular structures/equipment, such as buildings, docks, gates, etc., or nodes can be installed in various areas and locations near vehicles, for other extra-vehicular communication.

The features of the aforementioned embodiments, plus other embodiments, aspects, advantages and features of the present invention will come to those skilled in the art by reference to the description of the invention and referenced drawings, or by practice of the invention. Although this invention has been described above with reference to particular means, materials and embodiments, it is to be understood that the invention is not limited to these disclosed particulars, but extends instead to all equivalents within the scope of the following claims.

## Claims

1. An inter-nodal, expandable wireless communications network for vehicles, having a plurality of programmable nodes, each node comprising:
A radio frequency transceiver for data communication to or from any other node; and
An interface translator circuit capable of encoding and decoding packetized information comprising:
A microprocessor and data storage circuit for implementation of a data protocol; and
A generic data transfer protocol for transceiving of packetized information amongst a plurality of nodes in said network; and
An interface circuit for signal communication with a local interface bus; and
A local, hard-wired interface bus, comprising:
A circuit that provides bi-directional signal communication with said interface translator; and
Monitoring circuitry for gathering data from a multiplicity of separate inputs; and
Controlling circuitry for outputting a multiplicity of separate signals, for control of external devices.

2. An inter-nodal, expandable radio communications network, having physical, programmable nodes located on, within or near vehicles, each node comprising:
A radio frequency transceiver for two-way data communication to or from any other node; and
An interface translator circuit capable of encoding and decoding packetized information, comprising:
A microprocessor and data storage circuit for implementation of a data protocol; and
A generic data transfer protocol for transceiving of packetized information amongst a plurality of nodes in said network; and
An interface circuit for signal communication with a local interface bus; and
A local, hard-wired interface bus, comprising:
A circuit that provides bi-directional signal communication with said interface translator; and
Monitoring circuitry for a multiplicity of separate sensor inputs; and
Controlling circuitry for outputting a multiplicity of separate signals, for control of external devices.

3. The communications network of Claim 1, where the radio frequency transceiver for data communication is a Bluetooth compatible radio.

4. The communications network of Claim 2, where the radio frequency transceiver for data communication is a Bluetooth compatible radio.

5. The communications network of Claim 1, where the local, hard-wired interface bus circuit is a CAN standard bus.

6. The communications network of Claim 2, where the local, hard-wired interface bus circuit is a CAN standard bus.

7. The communications network of Claim 1, where the local, hard-wired interface bus circuit is an SAE J1708 standard bus.

8. The communications network of Claim 2, where the local, hard-wired interface bus circuit is an SAE J1708 standard bus.

9. The communications network of Claim 1, where the local, hard-wired interface bus circuit is an IEEE RS-422 standard bus.

10. The communications network of Claim 2, where the local, hard-wired interface bus circuit is an IEEE RS-422 standard bus.

11. The communications network of Claim 1, where the local, hard-wired interface bus circuit is an IEEE 1394 FireWire standard bus.

12. The communications network of Claim 2, where the local, hard-wired interface bus circuit is an IEEE 1394 FireWire standard bus.
